# EUROPÄISCHE PATENTSCHRIFT

(11) **EP 1 478 901 B1**
(45) Veröffentlichungstag und Bekanntmachung des Hinweises auf die Patenterteilung: **27.04.2011**
(21) Anmeldenummer: 03742965.1
(22) Anmeldetag: 27.02.2003
(51) Int. Cl.: G01B 11/14

(54) **VORRICHTUNG ZUR BERÜHRUNGSLOSEN ABSTANDSMESSUNG ZU EINER IN EINEM ENGSPALT BEFINDLICHEN FLÄCHE**
DEVICE FOR THE CONTACTLESS MEASUREMENT OF A DISTANCE IN RELATION TO A SURFACE LOCATED IN A NARROW GAP
DISPOSITIF POUR MESURER SANS CONTACT UNE DISTANCE PAR RAPPORT A UNE SURFACE SE TROUVANT DANS UNE FENTE ETROITE

(30) Priorität: 27.02.2002 DE 10208377
(43) Veröffentlichungstag der Anmeldung: 24.11.2004
(73) Patentinhaber: Fraunhofer-Gesellschaft zur Förderung der angewandten Forschung e.V., 80686 München (DE)
(72) Erfinder: MUNSER, Roland, 76199 Karlsruhe (DE); HARTRUMPF, Matthias, 76187 Karlsruhe (DE)
(74) Vertreter: Rösler, Uwe
(86) Internationale Anmeldenummer: PCT/EP2003/002037
(87) Internationale Veröffentlichungsnummer: WO 2003/073043

(56) Entgegenhaltungen:
- EP-A- 0 330 429
- EP-A- 0 589 066
- US-A- 6 043 891

## Beschreibung

### Technisches Gebiet

Die Erfindung bezieht sich auf eine Vorrichtung zur berührungslosen Abstandsmessung zu einer innerhalb eines einseitig offenen Engspaltes befindlichen Fläche, die gemeinsam mit zwei Seitenwänden den einseitig offenen Engspalt begrenzt, der eine Spaltbreite von maximal 5 mm und eine Spalttiefe von wenigstens 50 mm aufweist.

### Stand der Technik

Einseitig offene Engspalte der eingangs erwähnten Größenordnung spielen bei der Herstellung von aus Blechmaterialien gefertigten Tiefziehprodukte eine wesentliche Rolle. So werden bei Tiefziehvorgängen in der Regel aus Blech bestehende Flachmaterialien in ein Presswerkzeug eingespannt und anschließend mittels geeigneter Stempelwerkzeuge, die gegen das Flachmaterial verfahren werden, in eine gewünschte Form gebracht. Aufgrund ständig steigender Qualitätsanforderungen, die an möglichst toleranzfreie, tiefgezogene Fertig- oder Halbfertigprodukte gestellt werden, werden zunehmend erhöhte Anforderungen an den Tiefziehvorgang als solchen gestellt. Überdies fordern neuartige Leichtbaukonzepte die Verwendung neuartiger leichter und widerstandsfähiger metallischer Werkstoffe, die an die bestehende Tiefziehtechnologie erhöhte funktionelle sowie Leistungsanforderungen stellen.

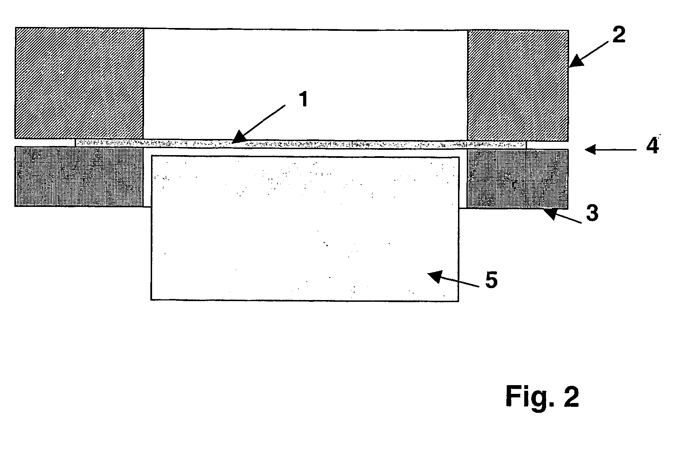

Anhand der in Figur 2 gezeigten Darstellung eines Tiefziehprozesses, soll das in diesem Zusammenhang auftretende technologische Problem näher erläutert werden. Ein zu verformendes metallisches Flachmaterial 1 ist im Bereich seines Umfangsrandes von einem Oberwerkzeug 2 und einem Niederhalter 3 bzw. Ziehrahmen kraft- bzw. pressbeaufschlagt eingespannt. Aufgrund der durch das Flachmaterial 1 vorgegebenen Materialdicke schließt das Oberwerkzeug 2, der Niederhalter 3 sowie jeweils die Seitenkantenfläche des Flachmaterials 1 einen Engspalt 4 ein, auf den im Weiteren noch im Einzelnen Bezug genommen wird. Der Tiefziehprozess selbst erfolgt mit Hilfe eines Unterwerkzeuges 5, das gegen das eingespannte Flachmaterial 1 verfahren wird, wodurch das Flachmaterial in eine vorgegebene Form gebracht wird.

Um die eingangs erwähnten erhöhten technischen und qualitativen Anforderungen an den gesamten Tiefziehprozess zu erfüllen, ist es erforderlich, die während des Tiefziehprozesses eingebrachten Anpressdrücke auf das zwischen Oberwerkzeug 2 und Niederhalter 3 eingeklemmte Flachmaterial 1 zu erfassen. So werden während des Tiefziehprozesses die zwischen dem Oberwerkzeug 2 und dem Niederhalter 3 eingeklemmten Bereiche des Flachmaterials 1 trotz herrschender Haltekräfte in Richtung der Bereiche gezogen, in denen die Materialverformung auftritt, wobei sich die durch das Oberwerkzeug 2 und den Niederhalter 3 eingespannten Flächenbereiche des Flachmaterials 1 reduzieren und sich die Tiefe des Engspaltes 4, der sog. Ziehspalt, vergrößert. Um definierte Anpressdrücke auf das zwischen dem Oberwerkzeug 2 und dem Niederhalter 3 geklemmte Flachmaterial während des Tiefziehvorganges ausüben zu können, müssen daher die durch verschiedene hydraulische Stempel (nicht dargestellt) hervorgerufenen Niederhaltekräfte in Abhängigkeit vom aktuellen Einziehweg der Seitenkanten des Flachmaterials 1 innerhalb des Ziehspaltes 4, vorzugsweise über den gesamten Umfang des Flachmaterials geregelt werden. Dieses Erfordernis ist insbesondere bei technisch hochwertigen metallischen Flachmaterialien relevant und zu beachten, deren Verformungseigenschaften kritisch in Bezug auf Fließ- oder Bruchgrenzen sind. Somit gilt es während des gesamten Tiefziehvorganges das durch den Verformungsvorgang verursachte Einzugsverhalten des zwischen dem Oberwerkzeug 2 und dem Niederhalter 3 eingeklemmten Flächenbereiches, das durch eine Lageänderung der Seitenkante des Flächenmaterials innerhalb des Engspaltes 4 charakterisierbar ist, zu erfassen. Es besteht daher die Aufgabe eine Abstandsmessung in Bezug auf die Seitenkante des Flachmaterials innerhalb des Engspaltes an ausgewählten Positionen von einer beliebigen Bezugslinie außerhalb des Eng- bzw. Ziehspalt vorzunehmen. Bei einer oberflächlichen Betrachtung stellt sich die Messaufgabe zunächst als unproblematisch dar, jedoch gestalten die einzuhaltenden Randbedingungen am betrachteten Tiefziehprozess die Messaufgabe schwieriger, als es zunächst den Anschein hat.

Die Schwierigkeit liegt in der Dimensionierung des Engspaltes, der je nach Dickenwahl des zu verformenden Flachmaterials eine Spaltbreite von maximal 5 mm, häufig jedoch nur 1 - 2 mm aufweist. Darüber hinaus weist die Spalttiefe bereits vor Beginn des Tiefziehprozesses 50 mm, typischerweise bis zu 100 mm auf, so dass die Bezeichnung Engspalt durchaus ihre Berechtigung hat. Während des Verformungsvorganges vermögen sich die Seitenkantenbereiche typischerweise um zusätzliche 150 mm in Richtung der Materialverformung zurück zu ziehen, so dass sich die Engspalttiefe während des Tiefziehprozesses auf etwa bis zu 250 mm vergrößert.

Aufgrund der beschriebenen extrem kleinen Engspaltdimensionierung scheint somit die Seitenkantenfläche des zu verformenden Flachmaterials, die in Bezug auf den Engspalt als eine Art Spaltboden, messtechnisch nahezu unzugänglich zu sein. Es liegt auf der Hand, dass jegliche taktile Messverfahren zur Abstands- bzw. Lagebestimmung der Seitenkante des Flachmaterials innerhalb des Engspaltes keine Anwendung finden können. Somit stehen offenbar lediglich bekannte berührungslose Messverfahren zur Verfügung, die jedoch aus folgenden Gründen nicht oder nur unbefriedigend das gestellte Messproblem zu lösen in der Lage sind. Laser-Messverfahren scheinen sich grundsätzlich für das gestellte Problem zu eignen, zumal Laser als einzige Lichtquellen in der Lage sind, einen Lichtstrahl zu erzeugen, der längs eines minimalen Messweges von etwa 500 mm (2 x 250 mm) einen Strahlquerschnitt von unter 1 mm ohne merkliche Divergenzerscheinungen aufweist. Aus diesem Grunde scheiden bspw. Ultraschallverfahren aus, die nach heutigem Kenntnisstand keine Ultraschallwellenbündel mit den geforderten Divergenzeigenschaften generieren können. Somit scheiden grundsätzlich all jene Messverfahren aus, die mit einem Messstrahl arbeiten, dessen Divergenz > 0,2° beträgt. Dies trifft bspw. zu für alle Moire-Verfahren, siehe hierzu Breuckmann, B.: Bildverarbeitung und optische Messtechnik in der industriellen Praxis. Franzis-Verlag, München, 1993, Verfahren mit codierten Lichtansatz, siehe hierzu ebenso vorstehend genannte Literaturstelle sowie alle Standard-Lichtschnittverfahren, siehe hierzu Fraunhofer-Allianz Vision: Leitfaden zur optischen 3-D-Meßtechnik. Stuttgart: Fraunhofer IRB Verlag, 1999, ISBN 3-8167-5266-7. Vorstehend genannte Standard-Lichtschnittverfahren eignen sich bereits aufgrund ihrer Beleuchtungssituation nicht für die beschriebene Messsituation, zumal sie einen wesentlich größeren Beleuchtungswinkel senkrecht zur Messebene erfordern, als es für das vorstehend genannte zweidimensionale Messproblem nötig wäre. Auch scheiden alle Messverfahren aus, die nur für einen kleinen Tiefen-Messbereich ausgelegt sind, wie bspw. holographische Interferometrie oder Spektral-Interferometrie, bei denen Formänderungen im Bereich < 0,1 mm erfassbar sind, zumal im genannten Messproblem Wegänderungen von etwa bis zu 100 mm erfasst werden müssen.

Neben den, sich aus den geometrischen Randbedingungen ergebenden Anforderungen an eine gewünschte Messvorrichtung zur Erfassung der Lageänderung der Seitenkante während des Tiefziehprozesses innerhalb des vorbeschriebenen Eng- bzw. Ziehspaltes, ergeben sich zudem Anforderungen in Bezug auf die Weglängenauflösung, in der Größenordnung typischerweise zwischen 0,1 und 0,2 mm, wodurch ansich bekannte Laserlaufzeitverfahren sowie Phasen-Laufzeitverfahren aufgrund ihrer nur ungenügend genauen Wegauflösung ausscheiden.

Schließlich gilt es die Lageveränderung der Seitenkante des sich verformenden Flachmaterials zeitaufgelöst möglichst kontinuierlich zu erfassen. Dies bedeutet, dass von dem gewünschten Messsystem Messzeitauflösungen mit Messpunktwiederholraten < 50 msec gefordert werden, so dass der Messvorgang mit einer minimalen Messfrequenz von 20 Hz durchzuführen ist. Aufgrund dieser geforderten Mindestmessgeschwindigkeit fallen somit alle bisher bekannten "langsamen" Messverfahren, wie bspw. das vorstehend genannte Phasen-Laufzeitverfahren mit typischen Messdauern > 0,5 sec. aus.

Schließlich sind sog. eindimensionale Triangulationssensoren bekannt und auf dem Markt erhältlich, siehe hierzu bspw. Brandenburg, W.; Noll, R.: Marktübersicht: Triangulationssensoren. In: Sensor-Report (1994), Nr.4, S.28-33, doch bieten derartige Sensoren lediglich die Möglichkeit für eine Punktmessung, so dass bei einer erwünschten Vermessung und Erfassung aller Seitenkantenbereiche eines tiefzuziehenden Flachmaterials eine Vielzahl derartiger Triangulationssensoren nötig wäre. Eine derartige Vielfachanordnung von Einzelsensoren würde jedoch einerseits sehr kostspielig, andererseits zu einem hohen technischen Justageaufwand führen, was jedoch einem praktischen Einsatz entgegensteht. Eine derartige Anordnung ist bspw. aus der EP 589 066 A1 zu entnehmen, aus der eine gattungsgemäße Vorrichtung hervorgeht, die den Einsatz eines Triangulationssensors vorsieht, der lediglich eine Punktmessung durchzuführen vermag.

Aus EP 0 330 429 A2 geht ein Verfahren und eine Vorrichtung zur Vermessung von Oberflächenprofilen, insbesondere von Dickenprofilen, von sich bewegenden Werkstücken hervor. Hierzu werden Ober- und Unterseite von einer Vielzahl optischer Messeinheiten abgetastet.

Es lässt sich daher feststellen, dass mit den derzeit bekannten Messtechniken bzw. Messverfahren das eingangs geschilderte Problem nicht oder nur unbefriedigend lösbar ist.

### Darstellung der Erfindung

Es besteht die Aufgabe eine Tiefziehvorrichtung mit zwei Haltewerkzeugen, zwischen denen ein Tiefziehblech derart einspannbar ist, dass wenigstens eine Seitenkantenfläche des Tiefziehblechs mit den Seitenwänden der Haltewerkzeuge einen einseitig offenen Engspalt begrenzt, und mit wenigstens einer optischen Sensoreinheit, die dem offenen Engspalt gegenüberliegend angeordnet ist, derart auszugestalten, dass die vorstehend zum Stand der Technik genannten Nachteile vermieden werden sollen. Insbesondere soll es möglich sein, die aufgrund des Tiefziehvorganges bedingte Lageänderung der Seitenkantenfläche hochpräzise und zuverlässig zu erfassen, wobei der hierfür messtechnische Aufwand und die damit verbundenen Kosten gering gehalten werden sollen. Der Bedienaufwand der mit der Messvorrichtung verbunden ist, soll insbesondere den Tiefziehvorgang als solchen nicht behindern, überdies soll die Messvorrichtung über eine anwenderfreundliche Robustheit und Justagemöglichkeit verfügen.

Die Lösung der der Erfindung zugrunde liegenden Aufgabe ist im Anspruch 1 angebeben. Den Erfindungsgedanken vorteilhaft weiterbildende Merkmale sind Gegenstand der Unteransprüche sowie der Beschreibung insbesondere unter Bezugnahme auf die Ausführungsbeispiele zu entnehmen.

Erfindungsgemäß zeichnet sich eine Tiefziehvorrichtung dadurch aus, dass der Engspalt eine Spaltbreite von max. 5 mm und eine Spalttiefe von wenigstens 50 mm aufweist, dass die optische Sensoreinheit fest an einem der Haltewerkzeuge oder an einer Komponente der Tiefziehvorrichtung derart angelenkt ist, dass eine räumlich festbleibende Positionierung gegenüber dem Engspalt besteht, und dass wenigstens eine strukturierte Lichtquelle vorgesehen ist, die eine Vielzahl getrennter Lichtstrahlen auf die Seitenkantenfläche des Tiefziehbleches richtet, dass eine optische Emfpangseinheit vorgesehen ist, die die an der Seitenkantenfläche rückgestreuten Lichtstrahlen zeitlich synchron detektiert, wobei die Vielzahl getrennter Lichtstrahlen und die optische Empfangseinheit eine Ebene aufspannen, die parallel zu den Seitenwänden des Engspaltes orientiert ist, und dass eine Auswerteeinheit vorgesehen ist, die die detektierten Lichtstrahlen auf der Grundlage des Lichtschnittverfahrens auswertet.

Der erfindungsgemäßen Abstandsmessvorrichtung liegt die Idee zugrunde, mit Hilfe wenigstens einer strukturierten Lichtquelle, die vorzugsweise als Laserlichtquelle ausgebildet ist, eine Vielzahl von Einzelstrahlen zu erzeugen, die in einer gemeinsamen fächerförmig ausgebildeten Strahlebene liegen und derart relativ zu dem Engspalt orientiert sind, dass die einzelnen Lichtstrahlen parallel zu den Seitenwänden des Engspaltes verlaufen und vorzugsweise ohne jegliche Innenwandberührungen innerhalb des Engspaltes, bezogen auf die den Engspalt begrenzenden Seitenwände, und ohne Zwischenschaltung optischer Elemente direkt auf die Fläche, im Sinne der Seitenkantenfläche eines im weiteren noch detailliert zu beschreibenden Flachmaterials, das im Wege eines Tiefziehprozesses verformt wird, treffen. Die Seitenkantenfläche ist typischerweise ein bis zwei Millimeter und kann Längen von bis zu über 1 m aufweisen. Ziel ist es, die Seitenkantenfläche längs ihrer gesamten Erstreckung messtechnisch zu erfassen, um letztlich auch Lageänderungsunterschiede längs ihrer Längserstreckung detektieren zu können. Hierzu ist es vorteilhaft, dass die strukturierte Lichtquelle eine Vielzahl einzelner fächerförmig auseinanderlaufender Lichtstrahlen aufweist, die längs einer geraden Linie auf die Fläche auftreffen und an dieser zurückgestreut werden. Die an der Fläche zurückgestreuten Lichtanteile der jeweils vereinzelten Lichtstrahlen werden mit Hilfe einer optischen Empfangseinheit detektiert, die über ein Präzisionsobjektiv verfügt und überdies eine Zeile, bestehend aus lichtempfindlichen Elementen bzw. Pixel aufweist, die koparallel zur Längserstreckung der Seitenkantenfläche in eben jener Ebene angeordnet ist, innerhalb der sich die einzelnen Lichtstrahlen der strukturierten Lichtquelle fächerförmig ausbreiten und die zugleich auch die Messebene darstellt. Die von der als Zeile mit einer Vielzahl nebeneinander angeordneten Pixel ausgebildete lichtempfindliche Empfangseinheit ist mit einer Auswerteeinheit verbunden, die die einzelnen Messsignale im Wege eines Lichtschnitt-Verfahrens zeitsynchron auswertet. Das Lichtschnitt-Verfahren ermöglicht eine Abstandsmessung zu einem Objekt, basierend auf einer Auswertung der Paralaxe zweier optischer Systeme, d.h. im vorstehend genannten Fall sind dies wenigstens eine strukturierte Lichtquelle und einer Kamera. Einzelheiten zum Lichtschnitt-Verfahren können beispielsweise aus der EP 0 725 921 B1 auf den Seiten 2 und 3 unter Bezugnahme auf die dortigen Figuren 1 und 2 entnommen werden.

Um den für die Abstandsmessung erfassbaren Flächenbereich der Seitenkantenfläche möglichst groß zu wählen, sieht in einer bevorzugten Ausführungsform die optische Sensoreinheit zwei strukturierte Lichtquellen vor, die beidseitig zur optischen Empfangseinheit angeordnet sind und gemeinsam mit der optischen Empfangseinheit eine Ebene aufspannen, die parallel zu den Seitenwänden des Engspaltes orientiert ist. Auf diese Weise können die Vielzahl von Einzellichtstrahlen, die fächerförmig von den einzelnen Lichtquellen ausgehen, in einer geraden Linie bzw. in einer Ebene nebeneinander liegend auf die zu vermessende Fläche auftreffen, wodurch sich der von der Sensoreinheit erfasste Flächenbereich im Unterschied zur Verwendung nur einer einzelnen strukturierten Lichtquelle verdoppelt. Ebenso wirkt sich eine derartige symmetrische Beleuchtung sowie Aufnahme der Fläche günstig im Hinblick auf eine gleichmäßige Strahlbreite an der Fläche aus sowie eine geringer nötige Schärfentiefe der innerhalb der optischen Empfangseinheit vorzusehenden Aufnahmeoptik.

Durch die gezielte Verwendung einer CCD-Zeile oder CMOS-Zeile als optische Empfangseinheit kann die Auflösegenauigkeit, verglichen mit herkömmlichen CCD- oder CMOS-Kameras, um wenigstens den Faktor 10 verbessert werden, zumal Zeilen mit beispielsweise 5000 Pixel oder mehr anstelle einer Pixelmatrix mit 512 x 512 Pixel eingesetzt werden können. Auf diese Weise wird die eingangs geforderte Auflösegenauigkeit bei der Abstandsbestimmung von 0,2 mm und kleiner ohne weiteres erreicht, die überdies mit Sub-Pixeling-Algorithmen unter Verwendung entsprechender Software-Auswertung der Strahlpositionen sogar noch übertroffen werden kann. Überdies ermöglichen derartige pixelorientierte Sensoren die zeitsynchrone Detektion aller von einer Seitenkantenfläche des tiefzuziehenden Bauteils reflektierten Lichtstrahlen, sodass die Verformung der Seitenkantenfläche zu jedem Zeitpunkt gesamtheitlich erfassbar ist, wodurch letztlich die Messgenauigkeit und -geschwindigkeit gegenüber einer zeitlich sequentiellen Messsignalerfassung sowie -auswertung deutlich verbessert werden kann.

Alternativ zu der vorstehend geschilderten Ausführungsform ist es jedoch auch möglich, die optische Sensoreinheit mit wenigstens einer strukturierten Lichtquelle vorzusehen, die anstelle niederdivergenter Einzelstrahlen mit Einzelstrahlquerschnitten kleiner 1 mm eine Vielzahl im Strahlquerschnitt linienförmig ausgebildeter Lichtstrahlen aussendet, die ebenso fächerförmig von der Lichtquelle ausgehen. Arrangiert man das aus einer Vielzahl von im Querschnitt linienförmig ausgebildeten Lichtstrahlen zusammengesetzte Lichtstrahlenbündel derart relativ zu dem zu vermessenden Engspalt, dass die einzelnen Lichtlinien den Engspalt vorzugsweise senkrecht schneiden, so bedarf es lediglich einer gezielten Lichtselektion an der optischen Empfangseinheit, durch die lediglich jene, an der Fläche innerhalb des Engspaltes rückgestreute Lichtanteile empfangen und zur weiteren Auswertung bereitgestellt werden. Zwar erhöht sich der mit der gezielten Signalausblendung verbundene Aufwand, der mit Hilfe mechanischer Blenden oder im Wege entsprechend selektiver Pixelauswertung betrieben werden kann, doch führt dies zugleich zum Vorteil, dass die optische Sensoreinheit mit einem vernachlässigbar geringen Justageaufwand gegenüber dem zu vermessenden Engspalt positioniert werden kann. Im Gegensatz zur Verwendung der eingangs erläuterten Einzeltriangulationssensoren mit nur geringstem Strahlquerschnitt ist die optische Sensoreinheit möglichst lagegenau gegenüber dem zu vermessenden Engspalt zu positionieren, wobei die Zeile aus optischen Elementen bzw. Pixeln möglichst genau koparallel zur Längserstreckung der innerhalb des Engspaltes befindlichen Fläche anzuordnen ist.

Alternativ zur zeilenförmigen Ausbildung der optischen Empfangseinheit ist es ebenso denkbar eine matrixförmige, insbesondere eine aus wenigen Zeilen bestehende Anordnung lichtempfindlicher Pixel zu verwenden. Der Justieraufwand der Empfangseinheit wird dadurch erheblich vermindert. Eine diesbezügliche Signalauswertung bedarf allerdings einer aufwendigeren Auswertesoftware, doch kann diese in Einzelfällen als eine durchaus probate Alternative angesehen werden.

Wie bereits in der Beschreibungseinleitung unter Bezugnahme auf das spezielle technische Problem, das sich bei der Optimierung von Tiefziehprozessen stellt, soll die erfindungsgemäß ausgebildete Vorrichtung zur berührungslosen Abstandsmessung zu einer innerhalb eines einseitig offenen Engspaltes befindlichen Fläche unter Bezugnahme auf die im weiteren dargestellten Ausführungsbeispiele beschrieben werden.

### Kurze Beschreibung der Erfindung

Die Erfindung wird nachstehend ohne Beschränkung des allgemeinen Erfindungsgedankens anhand eines Ausführungsbeispieles unter Bezugnahme auf die Zeichnungen exemplarisch beschrieben. Es zeigen:
- Fig. 1a: Schematisierte Draufsichtdarstellung eines messtechnisch erfassten Tiefziehprozesses,
- Fig. 1b: Querschnittsdarstellung eines schematisierten Tiefziehprozesses mit erfindungsgemäß ausgebildeter Abstandsmessung sowie
- Fig. 2: Schematische Darstellung einer Anordnung für einen Tiefziehprozess.

### Wege zur Ausführung der Erfindung, gewerbliche Verwendbarkeit

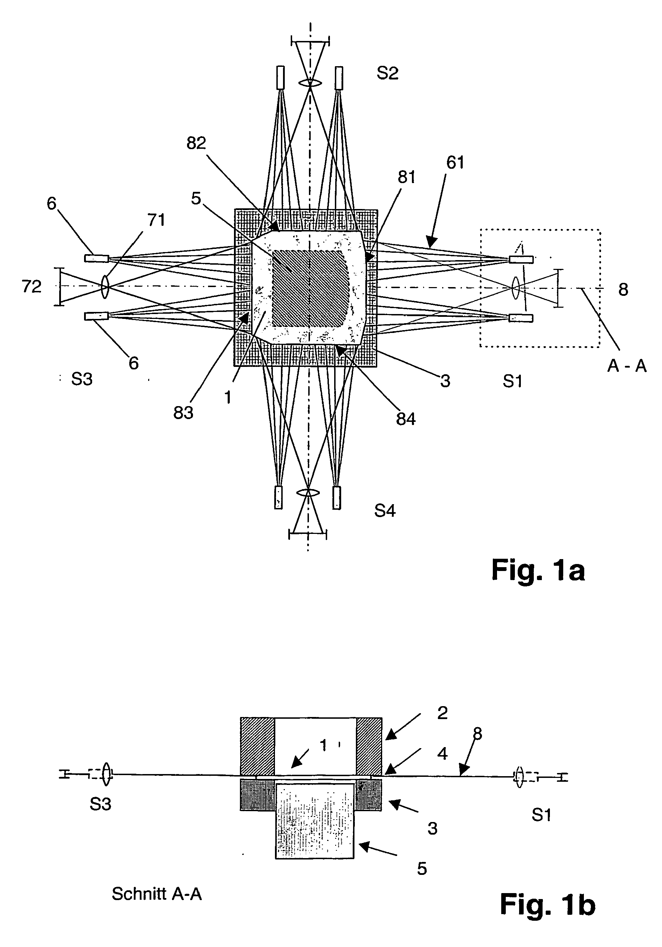

In Fig. 1a ist eine Draufsicht auf alle für einen kontrolliert durchführbaren Tiefziehprozess erforderlichen Komponenten dargestellt. Der eigentliche Tiefziehprozess erfolgt mit einer Anordnung, die bereits unter Bezugnahme auf Fig. 2 in der Beschreibungseinleitung näher beschrieben worden ist. Auf die bereits eingeführten Bezugszeichen wird ohne nochmalige Erläuterung Bezug genommen.

Das in dem Ausführungsbeispiel gemäß Fig. 1a zu verformende Flachmaterial 1 weist im Wesentlichen vier Seitenkantenbereiche 81 bis 84 auf, die von dem Niederhalter sowie dem nicht in der Figur 1a dargestellten Oberwerkzeug 2 fest eingeklemmt werden. Der in Fig. 1a schraffiert eingezeichnete Bereich innerhalb des Flachmaterials 1 deutet jenen Verformungsbereich an, der mit Hilfe des Unterwerkzeuges 5 zu verformen ist.

Um den Verformungsvorgang in seiner gesamten sich ausbildenden Raumform innerhalb des Flachmaterials 1 überwachen zu können, sind gegenüber jeder einzelnen Seitenkantenfläche 81 bis 84 jeweils eine optische Sensoreinheit S1 bis S4 in der dargestellten Weise angeordnet. Auf diese Weise können Lageänderungen der Seitenkantenflächen 81 bis 84 längs des gesamten Umfangsrandes des zu verformenden Flachmaterials 1 erfasst werden.

Jede einzelne optische Sensoreinheit S1 bis S4 weist zwei strukturierte Lichtquellen 6 in Form von Laser-Struktur-Projektoren auf, die fächerförmig auseinander laufende Einzelstrahlen 61 aussenden. Hierbei bestehen die Laser-Struktur-Projektoren vorzugsweise jeweils aus einem Halbleiterlaser, in dessen Strahlengang eine Kollimatoroptik sowie ein im Strahlengang der Kollimatoroptik nachgeschaltetes Hologramm angeordnet sind, durch das die Vielzahl von Einzelstrahlen erzeugbar ist. Auch ist es möglich anstelle des Halbleiterlasers eine LED einzusetzen, mit einer engbegrenzten Wellenlängenbandbreite.

Inmitten der beabstandet voneinander angeordneten strukturierten Lichtquellen 6 ist eine optische Empfangseinheit 7 vorgesehen, die über ein Präzisionsobjektiv 71 verfügt, in dessen Bildebene eine zeilenförmig ausgebildete Detektionseinheit in Form beispielsweise einer CCD-Zeile 72 angeordnet ist. Durch die pixelartig ausgebildete CCD-Zeile werden die Vielzahl rückreflektierter Lichtstrahlen zeitgleich detektiert und entsprechend ausgewetet. Alternativ zur CCD-Zeile eignen sich als optische Empfangseinheit grundsätzlich auch CMOS-Zeilen und andere zeilenförmig oder auch matrixförmig angeordnete lichtempfindliche Pixel.

Jede der einzelnen optischen Sensoreinheiten S1 bis S4 definiert eine Messebene, die durch die optische Achse 8 des Präzisionsobjektivs 1 sowie die Längserstreckung der zugehörigen Seitenkantenflächen 81 bis 84 definiert ist. Jede einzelne Messebene ist derart orientiert, dass sie koparallel zu den jeweiligen, den zugehörigen Engspalt einschließenden Seitenwänden der eingangs erläuterten Haltewerkzeuge, sprich Oberwerkzeug und Niederhalter, orientiert ist. Hierzu sind die einzelnen optischen Sensoreinheiten S1 bis S4 entsprechend zu den jeweiligen Engspalten zu justieren.

Eine derartige Positionierung geht insbesondere auch aus der in Fig. 1b dargestellten Schnittbilddarstellung hervor, die den Schnitt AA in Bezug auf Fig. 1a zeigt. Die optischen Sensoreinheiten S1 und S3 befinden sich exakt mit den Engspalten 4 auf gleicher Höhe bzw. in einer gemeinsamen Ebene.

Um den Tiefziehvorgang in der gewünschten Weise überwachen zu können, sind die Beleuchtungsfelder der einzelnen Lichtquellen derart auf die Längsdimensionen der Seitenkantenflächen angepasst, dass der gesamte Umfangsrand des Flachmaterials 1 sensoriell erfasst wird. Durch die Zusammenschau aller vier Sensoreinheiten S1 bis S4 ist es möglich, die Lageänderung der Seitenkantenflächen während des Tiefziehprozesses vollständig zu überwachen. Dies setzt voraus, dass die optischen Sensoreinheiten S1 bis S4 in ihrem Detektionsverhalten untereinander synchronisiert sind, d.h. die Ansteuer- und Auslesetaktung für jede einzelne CCD-Zeilen ist zeitlich aufeinander abzustimmen, so dass zeitgleiche Messsignale von allen vier optischen Sensoreinheiten gewonnen werden können, die in der Zusammenschau den tatsächlichen aktuellen Verformungszustand des gesamten Umfangsrandes des Flachmaterials angeben.

So werden die CCD-Zeilen über eine schnelle Interface-Elektronik von einem zentralen Rechner aus angesteuert und entsprechend ausgelesen. Die vier in dem Ausführungsbeispiel gemäß Fig. 1a dargestellten CCD-Zeilen werden synchron belichtet, um eine unverzerrte Momentaufnahme des gesamten Umfangsrandes des Flachmaterials zu erhalten. Aus den Strahlpositionen in jeder einzelnen Zeile können im lokalen Koordinatensystem jeder Sensoreinheit die x-y-Koordinaten der beleuchteten Seitenkantenflächenpunkte innerhalb der Messebene berechnet werden. Hierbei sei angenommen, dass die x-Achse der optischen Achse 8 entspricht und die y-Achse der Längserstreckung jeder einzelnen Seitenkantenfläche.

Mit Hilfe der messtechnisch erfassten Abstandssignale ist es möglich, den Tiefziehvorgang des Flachmaterials unter Echtzeitbedingungen zu überwachen und gegebenenfalls Regelgrößen zu generieren, die den Tiefziehvorgang als solchen zu beeinflussen vermögen, um letztlich das tiefgezogene Produkt zu optimieren.

Das aus allen vier in Fig. 1a dargestellten optischen Sensoreinheiten S1 bis S4 zusammengesetzte Sensorsystem entspricht somit einem Tiefzieh-Lichtschnitt-Sensor, mit dem die Erfassung der Lageänderung des gesamten Seitenkantenverlaufes bzw. Umfangsrandes des Flachmaterials möglich ist. Selbstverständlich können je nach Messbedingungen und geometrischen Beschaffenheiten des zu verformenden Flachmaterials mehrere, einzelne optische Sensoreinheiten längs einer Seitenkante des Flachmaterials angeordnet werden, um letztlich die Überwachung und messtechnische Erfassung der gesamten Seitenkantenlänge zu gewährleisten. Auch ist die Größe des beleuchteten Flächenbereiches längs einer Seitenkante von einer einzigen Sensoreinheit durch entsprechende Abstandsvariation gegenüber dem Engspalt möglich.

Aus praktischen Gründen ist es von besonderem Vorteil, die einzelnen optischen Sensoreinheiten S1 und S4 fest an einer Komponente der Tiefziehvorrichtung anzulenken, um eine räumlich festbleibende Positionierung bzw. Justierung gegenüber dem jeweiligen Engspalt vornehmen zu können. Die Anbringung der optischen Sensoreinheiten an einer bestimmten Komponente der Tiefziehvorrichtung sollte unter Maßgabe der Vibrations- bzw. Erschütterungsfreiheit erfolgen, um Störeinflüssen durch mechanische Schwingungen auf das optische Sensorsystem möglichst zu vermeiden. Zur Befestigung eignen sich in vorteilhafter Weise entweder der Niederhalter (3) oder der Stößel (nicht in der Figur dargestellt) der Tiefziehvorrichtung, an dem das Oberwerkzeug (2) befestigt ist.

### Bezugszeichenliste

- 1: Flachmaterial
- 2: Oberwerkzeug
- 3: Niederhalter
- 4: Engspalt, Ziehspalt
- 5: Unterwerkzeug
- 6: Strukturierte Lichtquelle
- 61: Fächerförmig aufgeweitetes Lichtstrahlenfeld
- 7: Optische Empfangseinheit
- 71: Präzisionsobjektiv
- 72: CCD-Zeile
- 8: Optische Achse
- 81-84: Seitenkantenflächen
- S1-S4: Optische Sensoreinheiten

## Patentansprüche

1. Tiefziehvorrichtung mit zwei Haltewerkzeugen (2,3), zwischen denen ein Tiefziehblech (1) derart einspannbar ist, dass wenigstens eine Seitenkantenfläche (81,82,83,84) des Tiefziehblechs (1) mit den Seitenwänden der Haltewerkzeuge (2,3) einen einseitig offenen Engspalt (4) begrenzt, und mit wenigstens einer optischen Sensoreinheit (S1,S2,S3,S4), die dem offenen Engspalt (4) gegenüberliegend angeordnet ist,
**dadurch gekennzeichnet, dass** der Engspalt (4) eine Spaltbreite von maximal 5 mm und eine Spalttiefe von wenigstens 50 mm aufweist,
dass die optische Sensoreinheit (S1,S2,S3,S4) fest an einem der Haltewerkzeuge (2,3) oder an einer Komponente der Tiefziehvorrichtung derart angelenkt ist, dass eine räumlich festbleibende Positionierung gegenüber dem Engspalt besteht (4), und dass wenigstens eine strukturierte Lichtquelle (6) vorgesehen ist, die eine Vielzahl getrennter Lichtstrahlen auf die Seitenkantenfläche des Tiefziehbleches (1) richtet, dass eine optische Empfangseinheit (7) vorgesehen ist, die die an der Seitenkantenfläche des Tiefziehbleches (1) rückgestreuten Lichtstrahlen zeitlich synchron detektiert,
wobei die Vielzahl getrennter Lichtstrahlen und die optische Empfangseinheit (7) eine Ebene aufspannen, die parallel zu den Seitenwänden des Engspaltes (4) orientiert ist,
und
dass eine Auswerteeinheit vorgesehen ist, die die detektierten Lichtstrahlen auf der Grundlage des Lichtschnittverfahrens auswertet.

2. Vorrichtung nach Anspruch 1,
**dadurch gekennzeichnet, dass** die strukturierte Lichtquelle (6) einen Laser aufweist, dessen Strahl fächerförmig in eine Vielzahl von Einzelstrahlen aufgeteilt ist, die allesamt in einer gemeinsamen Fächerebene liegen.

3. Vorrichtung nach Anspruch 2,
**dadurch gekennzeichnet, dass** der Laser ein Halbleiterlaser ist, in dessen Laserstrahl eine Kollimatoroptik sowie ein Hologramm angeordnet ist, durch das der kollimierte Laserstrahl in eine Vielzahl einzelner Lichtbündel aufspaltbar ist.

4. Vorrichtung nach einem der Ansprüche 1 bis 3,
**dadurch gekennzeichnet, dass** die einzelnen Lichtstrahlen je einer strukturierten Lichtquelle (6) zueinander jeweils einen weitgehend konstanten Winkel einschließen.

5. Vorrichtung nach einem der Ansprüche 1 bis 4,
**dadurch gekennzeichnet, dass** die optische Empfangseinheit (7) wenigstens einen auf einem pixelorientierten Sensorprinzip beruhenden Lichtsensor vorsieht.

6. Vorrichtung nach einem der Ansprüche 1 bis 5,
**dadurch gekennzeichnet, dass** die optische Empfangseinheit (7) eine Zeile oder eine Matrixanordnung aus lichtempfindlichen Elementen aufweist.

7. Vorrichtung nach Anspruch 6,
**dadurch gekennzeichnet, dass** die optische Empfangseinheit (7) derart gegenüber dem Engspalt (4) angeordnet ist, dass die eine Zeile aus lichtempfindlichen Elementen längs zur Längserstreckung des Engspaltes (4) orientiert ist.

8. Vorrichtung nach Anspruch 6 oder 7,
**dadurch gekennzeichnet, dass** die Zeile oder die Matrixanordnung aus lichtempfindlichen Elementen eine CCD-Zeile (72) oder CCD-Matrix mit Pixel aufweist.

9. Vorrichtung nach einem der Ansprüche 1 bis 8,
**dadurch gekennzeichnet, dass** die optische Sensoreinheit (S1, S2, S3, S4) zwei strukturierte Lichtquellen (6) aufweist, die beidseitig zur optischen Empfangseinheit (7) angeordnet sind und gemeinsam mit der optischen Empfangseinheit (7) eine Ebene aufspannen, die parallel zu den Seitenwänden des Engspaltes (4) orientiert ist.

10. Vorrichtung nach einem der Ansprüche 1 bis 9,
**dadurch gekennzeichnet, dass** das Tiefziehblech (1) n Seitenkantenflächen aufweist, die von den Haltewerkzeugen (2,3) gefasst sind und mit diesen jeweils einen Engspalt (4) einschließen,
dass wenigstens einer Seitenkantenfläche wenigstens eine optischen Sensoreinheit (S1, S2, S3, S4) zugeordnet ist, und
dass jede optische Sensoreinheit (S1, S2, S3, S4) zeitlich zu jeder anderen optischen Sensoreinheit (S1, S2, S3, S4) synchronisierte Abstandsmessungen vornimmt.

11. Vorrichtung nach Anspruch 10,
**dadurch gekennzeichnet, dass** eine Echt-Zeit-Regelung vorgesehen ist, die die von den optischen Sensoreinheiten (S1,S2,S3,S4) gelieferten Messsignale zur Prozessüberwachung des Tiefziehvorganges auswertet.

## Claims

1. A deep-draw device with two holding tools (2, 3), between which a deep-draw metal sheet (1) can be clamped in such a manner that at least one side edge surface (81, 82, 83, 84) of the deep-draw metal sheet (1) delimits a narrow gap (4), which is open on one side, with the side walls of the holding tools (2, 3), and with at least one optical sensor unit (S1, S2, S3, S4) which is arranged opposite the open narrow gap (4) ,
**characterised in that** the narrow gap (4) has a gap width of a maximum of 5 mm and a gap depth of at least 50 mm,
**in that** the optical sensor unit (S1, S2, S3, S4) is securely articulated on one of the holding tools (2, 3) or on a component of the deep-draw device in such a manner, that a spatially fixed positioning exists opposite the narrow gap (4), and
**in that** at least one structured light source (6) is provided, which directs a multiplicity of separate light beams onto the side edge surface of the deep-draw metal sheet (1),
**in that** an optical receiving unit (7) is provided, which temporally synchronously detects the light beams backscattered at the side edge surface of the deep-draw metal sheet (1),
wherein the multiplicity of separate light beams and the optical receiving unit (7) span a plane which is orientated parallel to the side walls of the narrow gap (4),
and
**in that** an evaluation unit is provided, which evaluates the detected light beams on the basis of the light-section procedure.

2. The device according to Claim 1,
**characterised in that** the structured light source (6) has a laser, the beam of which is divided in a fan-shaped manner into a multiplicity of individual beams which all lie in a common fan plane.

3. The device according to Claim 2,
**characterised in that** the laser is a semiconductor laser, in the laser beam of which a collimator optic and also a hologram, by means of which the collimated laser beam can be split into a multiplicity of pencils of rays, are arranged.

4. The device according to any one of Claims 1 to 3,
**characterised in that** the individual light beams for each structured light source (6) in each case enclose a substantially constant angle with respect to one another.

5. The device according to any one of Claims 1 to 4,
**characterised in that** the optical receiving unit (7) provides at least one light sensor based on a pixel-orientated sensor principle.

6. The device according to any one of Claims 1 to 5,
**characterised in that** the optical receiving unit (7) has a row or a matrix arrangement made up of light-sensitive elements.

7. The device according to Claim 6,
**characterised in that** the optical receiving unit (7) is arranged opposite the narrow gap (4) in such a manner that the one row made up of light-sensitive elements is orientated along the longitudinal extent of the narrow gap (4).

8. The device according to Claim 6 or 7,
**characterised in that** the row or the matrix arrangement made up of light-sensitive elements has a CCD row (72) or CCD matrix with pixels.

9. The device according to any one of Claims 1 to 8,
**characterised in that** the optical sensor unit (S1, S2, S3, S4) has two structured light sources (6) which are arranged on both sides of the optical receiving unit (7) and jointly with the optical receiving unit (7) span a plane which is orientated parallel to the side walls of the narrow gap (4).

10. The device according to any one of Claims 1 to 9,
**characterised in that** the deep-draw metal sheet (1) has n side edge surfaces which are held by the holding tools (2, 3) and enclose one narrow gap (4) in each case with the same,
**in that** at least one optical sensor unit (S1, S2, S3, S4) is assigned to at least one side edge surface, and
**in that** each optical sensor unit (S1, S2, S3, S4) undertakes distance measurements which are temporally synchronised to each other optical sensor unit (S1, S2, S3, S4).

11. The device according to Claim 10,
**characterised in that** a real-time control is provided, which evaluates the measurement signals delivered by the optical sensor units (S1, S2, S3, S4) for process monitoring of the deep-draw process.

## Revendications

1. Dispositif d'emboutissage comprenant deux outils de maintien (2, 3), entre lesquels une tôle d'emboutissage (1) peut être serrée, de telle sorte qu'au moins une surface d'arête latérale (81, 82, 83, 84) de la tôle d'emboutissage (1) délimite une fente étroite (4) ouverte d'un côté avec les parois latérales des outils de maintien (2, 3), et au moins une unité de détecteur optique (S1, S2, S3, S4), qui est disposée en face de la fente étroite (4) ouverte,
**caractérisé en ce que** la fente étroite (4) présente une largeur de fente d'au maximum 5 mm et une profondeur de fente d'au moins 50 mm,
**en ce que** l'unité de détecteur optique (S1, S2, S3, S4) est articulée fixement sur l'un des outils de maintien (2, 3) ou sur un composant du dispositif d'emboutissage, de telle sorte qu'on a un positionnement restant fixe dans l'espace par rapport à la fente étroite (4), et **en ce qu'**au moins une source de lumière (6) structurée est prévue, laquelle dirige une pluralité de faisceaux lumineux séparés sur la surface d'arête latérale de la tôle d'emboutissage (1),
**en ce qu'**une unité de réception optique (7) est prévue, qui détecte de façon synchrone dans le temps les faisceaux lumineux rétrodiffusés sur la surface d'arête latérale de la tôle d'emboutissage (1),
la pluralité de faisceaux lumineux séparés et l'unité de réception optique (7) sous-tendant un plan qui est orienté parallèlement aux parois latérales de la fente étroite (4), et
**en ce qu'**il est prévu une unité d'analyse qui analyse les faisceaux lumineux détectés sur la base de la méthode de la coupe optique.

2. Dispositif selon la revendication 1,
**caractérisé en ce que** la source de lumière (6) structurée présente un laser, dont le faisceau est partagé à la façon d'un éventail en une pluralité de faisceaux individuels qui se situent tous dans un plan en éventail commun.

3. Dispositif selon la revendication 2,
**caractérisé en ce que** le laser est un laser à semiconducteurs, dans le faisceau duquel sont disposés une optique de collimateur et un hologramme, par lequel le faisceau laser collimaté peut être divisé en une pluralité de faisceaux lumineux individuels.

4. Dispositif selon l'une quelconque des revendications 1 à 3,
**caractérisé en ce que** les faisceaux lumineux individuels de respectivement une source de lumière (6) structurée forment les uns par rapport aux autres à chaque fois un angle largement constant.

5. Dispositif selon l'une quelconque des revendications 1 à 4,
**caractérisé en ce que** l'unité de réception optique (7) prévoit au moins un capteur de lumière reposant sur un principe de capteur à pixels.

6. Dispositif selon l'une quelconque des revendications 1 à 5,
**caractérisé en ce que** l'unité de réception optique (7) présente une ligne ou un dispositif de matrice à base d'éléments sensibles à la lumière.

7. Dispositif selon la revendication 6,
**caractérisé en ce que** l'unité de réception optique (7) est disposée par rapport à la fente étroite (4) de telle sorte qu'une ligne à base d'éléments sensibles à la lumière est orientée longitudinalement à l'extension longitudinale de la fente étroite (4).

8. Dispositif selon la revendication 6 ou 7,
**caractérisé en ce que** la ligne ou le dispositif de matrice à base d'éléments sensibles à la lumière présente une ligne CCD (72) ou une matrice CCD avec pixel.

9. Dispositif selon l'une quelconque des revendications 1 à 8,
**caractérisé en ce que** l'unité de détecteur optique (S1, S2, S3, S4) présente deux sources de lumière (6) structurées, qui sont disposées des deux côtés de l'unité de réception optique (7) et sous-tendent conjointement avec l'unité de réception optique (7) un plan qui est orienté parallèlement aux parois latérales de la fente étroite (4).

10. Dispositif selon l'une quelconque des revendications 1 à 9,
**caractérisé en ce que** la tôle d'emboutissage (1) présente n surfaces d'arête latérale, qui sont saisies par les outils de maintien (2, 3) et forment avec chacun de ceux-ci une fente étroite (4),
**en ce qu'**au moins une unité de détecteur optique (S1, S2, S3, S4) est attribuée à au moins une surface d'arête latérale, et
**en ce que** chaque unité de détecteur optique (S1, S2, S3, S4) effectue des mesures de distance synchronisées dans le temps par rapport à chaque autre unité de détecteur optique (S1, S2, S3, S4).

11. Dispositif selon la revendication 10,
**caractérisé en ce qu'**il est prévu un réglage en temps réel qui analyse les signaux de mesure fournis par les unités de détecteurs optiques (S1, S2, S3, S4) pour le contrôle du processus d'emboutissage.
